(19) Europäisches Patentamt
European Patent Office
Office européen des brevets

(11) EP 1 127 912 A1

(12) **EUROPÄISCHE PATENTANMELDUNG**

(43) Veröffentlichungstag:
**29.08.2001 Patentblatt 2001/35**

(21) Anmeldenummer: **01103548.2**

(22) Anmeldetag: **19.02.2001**

(51) Int Cl.[7]: **C08J 5/18**, C08K 5/3475, C08K 5/3492, B32B 27/18, B32B 27/36, B32B 27/32, C08G 61/08 // C08L67:02

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **28.02.2000 DE 10009246**

(71) Anmelder: **Mitsubishi Polyester Film GmbH
65203 Wiesbaden (DE)**

(72) Erfinder:
- **Pfeiffer, Herbert, Dr.
55126 Mainz (DE)**
- **Davis, Richard Lee
65187 Wiesbaden (DE)**
- **Hilkert, Gottfried, Dr.
55291 Saulheim (DE)**
- **Murschall, Ursula, Dr.
55283 Nierstein (DE)**

(74) Vertreter: **Schweitzer, Klaus, Dr. et al
Patentanwaltskanzlei Zounek,
Industriepark Kalle-Albert,
Gebäude H391
Rheingaustrasse 190-196
65174 Wiesbaden (DE)**

(54) **Weisse, biaxial orientierte und UV-stabilisierte Polyesterfolie mit Cycloolefincopolymer (COC), Verfahren zu ihrer Herstellung und ihre Verwendung**

(57) Die vorliegende Anmeldung betrifft eine weiße, biaxial orientierte, UV-stabilisierte Polyesterfolie mit mindestens einer Basisschicht, die ein Cycloolefincopolymeres (COC) in einer Menge von 2 bis 60 Gew.-%, bezogen auf das Gewicht der Basisschicht enthält, wobei die Glasübergangstemperatur des COCs im Bereich von 70 bis 270 °C liegt. Die Basisschicht enthält zusätzlich einen UV-Stabilisator als Lichtschutzmittel in einer Menge von 0,01 bis 5,0 Gew.-%, bezogen auf das Gewicht der Basisschicht. Die erfindungsgemäße Folie eignet sich zur Verpackung von licht- und/oder luftempfindlichen Nahrungs- und Genußmitteln oder für den Einsatz im industrieellen Bereich, z.B. bei der Herstellung von Prägefolien oder als Etikettenfolie, oder für Bildaufzeichnungspapiere, Druckbögen und für magnetische Aufzeichnungskarten.

EP 1 127 912 A1

## Beschreibung

Die vorliegende Erfindung betrifft eine weiße, biaxial orientierte, UV-stabilisierte Polyesterfolie, die mindestens eine Schicht umfaßt, welche einen Polyesterrohstoff und ein Cycloolefincopolymer (COC) enthält. Die Erfindung betrifft ferner ein Verfahren zur Herstellung der Polyesterfolie sowie ihre Verwendung.

Weiße, biaxial orientierte Polyesterfolien sind nach dem Stand der Technik bekannt. Diese nach dem Stand der Technik bekannten Folien zeichnen sich entweder durch eine gute Herstellbarkeit, eine gute Optik oder durch ein akzeptables Verarbeitungsverhalten aus.

In der DE-A 2 353 347 wird ein Verfahren zur Herstellung einer ein- oder mehrschichtigen, milchigen Polyesterfolie beschrieben, das dadurch gekennzeichnet ist, daß man ein Gemisch aus Teilchen eines linearen Polyesters mit 3 bis 27 Gew.-% eines Homopolymeren oder Mischpolymeren von Ethylen oder Propylen herstellt, das Gemisch als Film extrudiert, den Film abschreckt und durch Verstrecken in senkrecht zueinander verlaufenden Richtungen biaxial orientiert und den Film thermofixiert. Nachteilig an dem Verfahren ist, daß das bei der Herstellung der Folie anfallende Regenerat (im Wesentlichen ein Gemisch aus Polyesterrohstoff und Ethylen oder Propylen-Mischpolymer) nicht mehr eingesetzt werden kann, da ansonsten die Folie gelb wird. Das Verfahren ist damit aber unwirtschaftlich und die mit Regenerat produzierte Folie konnte sich am Markt nicht durchsetzen. Außerdem weist die Folie deutlich zu hohe Rauhigkeiten auf und hat damit ein sehr mattes Aussehen (sehr niedriger Glanz), was für viele Anwendungszwecke unerwünscht ist.

In der EP-A 0 300 060 wird eine einschichtige Polyesterfolie beschrieben, die außer Polyethylenterephthalat noch 3 bis 40 Gew.-% eines kristallinen Propylenpolymeren und 0,001 bis 3 Gew.-% einer oberflächenaktiven Substanz enthält. Die oberflächenaktive Substanz bewirkt, daß die Anzahl der Vakuolen in der Folie ansteigt und gleichzeitig ihre Größe in gewünschtem Maße abnimmt. Hierdurch wird eine höhere Opazität und eine niedrigere Dichte der Folie erzielt. Nachteilig an der Folie bleibt weiterhin, daß das bei der Herstellung der Folie anfallende Regenerat (im Wesentlichen ein Gemisch aus Polyesterrohstoff und Propylen-Homopolymer) nicht mehr eingesetzt werden kann, da ansonsten die Folie gelb wird. Das Verfahren ist damit aber unwirtschaftlich und die mit Regenerat produzierte Folie konnte sich am Markt nicht durchsetzen. Außerdem weist die Folie deutlich zu hohe Rauhigkeiten auf und hat damit ein sehr mattes Aussehen (sehr niedriger Glanz), was für viele Anwendungszwecke unerwünscht ist.

In der EP-A 0 360 201 wird eine mindestens zweischichtige Polyesterfolie beschrieben, die eine Basisschicht mit feinen Vakuolen enthält, deren Dichte zwischen 0,4 und 1,3 kg/dm$^3$ liegt und mindestens eine Deckschicht aufweist, deren Dichte größer als 1,3 kg/dm$^3$ ist. Die Vakuolen werden durch Zugabe von 4 bis 30 Gew.-% eines kristallinen Propylenpolymeren und anschließender biaxialer Streckung der Folie erzielt. Durch die zusätzliche Deckschicht wird die Herstellbarkeit der Folie besser (keine Streifenbildung auf der Oberfläche der Folie), die Oberflächenspannung wird erhöht und die Rauhigkeit der laminierten Oberfläche kann verringert werden. Nachteilig bleibt weiterhin, daß das bei der Herstellung der Folie anfallende Regenerat (im Wesentlichen ein Gemisch aus Polyesterrohstoff und Propylen-Homopolymer) nicht mehr eingesetzt werden kann, da ansonsten die Folie gelb wird. Das Verfahren ist damit aber unwirtschaftlich und die mit it Regenerat produzierte Folie konnte sich am Markt nicht durchsetzen. Außerdem weist die in den Beispielen aufgeführten Folien noch immer zu hohe Rauhigkeiten auf und hat damit ein mattes Aussehen (niedriger Glanz), was für viele Anwendungszwecke unerwünscht ist.

In der EP-A 0 795 399 wird eine zumindest zweischichtige Polyesterfolie beschrieben, die eine Basisschicht mit feinen Vakuolen enthält, deren Dichte zwischen 0,4 und 1,3 kg/dm$^3$ liegt und mindestens eine Deckschicht aufweist, deren Dichte größer als 1,3 kg/dm$^3$ beträgt. Die Vakuolen werden durch Zugabe von 5 bis 45 Gew.-% eines thermoplastischen Polymers zum Polyesterrohstoff in der Basis und anschließender biaxialer Streckung der Folie erzielt. Als thermoplastische Polymere werden u.a. Polypropylen, Polyethylen, Polymethyl-Penten, Polystyrol oder Polycarbonat genannt, wobei Polypropylen das bevorzugte thermoplastische Polymer ist. Durch die zusätzliche Deckschicht wird die Herstellbarkeit der Folie besser (keine Streifenbildung auf der Oberfläche der Folie), die Oberflächenspannung wird erhöht und die Rauhigkeit der laminierten Oberfläche kann den jeweiligen Erfordernissen angepasst werden. Eine weitere Modifizierung der Folie in der Basisschicht und/oder in den Deckschichten mit Weiß-Pigmenten (in der Regel $TiO_2$) und/oder mit optischen Aufhellern ermöglicht die Anpassung der Folieneigenschaften an die jeweiligen Anwendungserfordernisse. Nachteilig bleibt weiterhin, daß das bei der Herstellung der Folie anfallende Regenerat (im Wesentlichen ein Gemisch aus Polyesterrohstoff und dem additiven Rohstoff) nicht mehr eingesetzt werden kann, da ansonsten die Folie undefiniert in der Farbe verändert wird, was in hohem Maße unerwünscht ist. Das Verfahren ist dam it unwirtschaftlich und die mit Regenerat produzierte Folie konnte sich am Markt nicht durchsetzen. Außerdem weisen die in den Beispielen aufgeführten Folien noch immerzu hohe Rauhigkeiten auf und haben damit ein mattes Aussehen (niedriger Glanz), was für viele Anwendungszwecke unerwünscht ist.

In der DE-A 195 40 277 wird eine ein- oder mehrschichtige Polyesterfolie beschrieben, die eine Basisschicht mit feinen Vakuolen enthält, deren Dichte zwischen 0,6 und 1,3 kg/dm$^3$ liegt und eine Doppelbrechung in der Ebene aufweist, die von -0,02 bis 0,04 reicht. Die Vakuolen werden durch Zugabe von 3 bis 40 Gew.-% eines thermoplastischen Harzes zum Polyesterrohstoff in der Basis und anschließender biaxialer Streckung der Folie erzielt. Als thermoplastische Harze werden u.a. Polypropylen, Polyethylen, Polymethyl-Penten, cyclische Olefin-Polymere, Polyacrylharze, Polystyrol oder Polycarbonat genannt, wobei Polypropylen und Polystyrol bevorzugte Rohstoffe sind. Durch Einhalt der angegebenen Grenzen für die Doppelbrechung der Folie zeichnet sich die beanspruchte Folie insbesondere durch eine überlegene Reißfestigkeit und überlegene Isotropieeigenschaften aus. Nachteilig bleibt jedoch, daß das bei der Herstellung der Folie anfallende Regenerat nicht mehr eingesetzt werden kann, da ansonsten die Folie undefiniert in der Farbe verändert wird, was sehr unerwünscht ist. Das Verfahren ist damit unwirtschaftlich und die mit Regenerat produzierte Folie konnte sich am Markt nicht durchsetzen. Außerdem weisen die in den Beispielen aufgeführten Folien noch immer zu hohe Rauhigkeiten auf und haben damit ein mattes Aussehen (niedriger Glanz), was für viele Anwendungszwecke unerwünscht ist.

Die Aufgabe der vorliegenden Erfindung bestand darin, eine weiße, biaxial orientierte Polyesterfolie bereitzustellen, die sich durch einen hohen Glanz und durch eine verbesserte Herstellbarkeit, d.h. geringe Herstellkosten, auszeichnet und die darüber hinaus eine hohe UV-Stabilität aufweist. Insbesondere soll gewährleistet sein, daß das bei dem Herstellprozeß immanent anfallene Verschnittmaterial (Regenerat) in einer Konzentration von 10 bis 70 Gew.-%, bezogen auf das Gesamtgewicht der Folie, wieder für den Herstellprozess eingesetzt werden kann, ohne daß dabei die physikalischen und optischen Eigenschaften der mit Regenerat hergestellten Folie nennenswert negativ beeinflußt werden. Insbesondere soll durch die Regeneratzugabe keine nennenswerte Gelbfärbung der Folie auftreten.

Eine hohe UV-Stabilität bedeutet, daß die Folien durch Sonnenlicht oder andere UV-Strahlung nicht oder nur extrem wenig geschädigt werden, so daß sich die Folien für Außenanwendungen und/oder kritische Innenanwendungen eignen. Insbesondere sollen die Folien bei mehrjähriger Außenanwendung nicht vergilben, keine Versprödung oder Rissbildung der Oberfläche zeigen und auch keine Verschlechterung der mechanischen Eigenschaften aufweisen. Hohe UV-Stabilität bedeutet demnach, daß die Folie das UV-Licht absorbiert und Licht erst im sichtbaren Bereich durchläßt.

Die Aufgabe wird erfindungsgemäß durch eine weiße, biaxial orientierte und UV-stabilisierte Polyesterfolie mit mindestens einer Basisschicht aus Polyesterrohstoff gelöst, deren kennzeichnende Merkmale darin zu sehen sind, daß zumindest die Basis-schicht zusätzlich Cycloolefincopolymer (COC) in einer Menge von 2 bis 60 Gew.-%, bezogen auf das Gewicht der Basisschicht enthält, wobei die Glasübergangstemperatur des Cycloolefincopolymeren (COC) im Bereich von 70 bis 270 °C liegt, und daß die Basisschicht mindestens einen UV-Stabilisator als Lichtschutzmittel enthält.

Unter einer weißen, biaxial orientierten Polyesterfolie im Sinne der vorliegenden Erfindung wird eine solche Folie bezeichnet, die einen Weißgrad von mehr als 70 %, bevorzugt von mehr als 75 % und besonders bevorzugt von mehr als 80 %, aufweist. Desweiteren beträgt die Opazität der erfindungsgemäßen Folie mehr als 55 %, bevorzugt mehr als 60 % und besonders bevorzugt mehr als 65 %.

Zur Erzielung des gewünschten Weißgrades der erfindungsgemäßen Folie soll die Menge an Cycloolefincopolymer (COC) in der Basisschicht größer als 2 Gew.-% sein, andernfalls ist der Weißgrad kleiner als 70 %. Ist die Menge an COC andererseits größer als 60 Gew.-%, dann lässt sich die Folie nicht mehr wirtschaftlich herstellen, da sie sich nicht mehr verfahrenssicher verstrecken lässt.

Weiterhin ist es notwendig, daß die Glasübergangstemperatur des eingesetzten COCs größer als 70 °C ist. Andernfalls, wenn die Glasübergangstemperatur des eingesetzten COCs kleiner als 70 °C ist, ist das Rohstoffgemisch schlecht verarbeitbar, weil es sich nur noch schlecht extrudieren läßt. Der gewünschte Weißgrad wird nicht mehr erreicht und das eingesetzte Regenerat führt zu einer Folie, die zu einer erhöhten Gelbfärbung neigt. Ist andererseits die Glasübergangstemperatur des ausgewählten COCs größer als 270 °C, dann wird sich die Rohstoffmischung im Extruder nicht mehr ausreichend homogenisieren lassen. Dies hat dann eine Folie mit unerwünscht inhomogenen Eigenschaften zur Folge.

In der bevorzugten Ausführungsform der erfindungsgemäßen Folie liegt die Glasübergangstemperatur der verwendeten COCs in einem Bereich von 90 bis 250 °C und in der besonders bevorzugten Ausführungsform in einem Bereich von 110 bis 220 °C.

Überraschenderweise wurde gefunden, daß durch den Zusatz eines COCs in der vorstehend beschriebenen Weise eine weiße, opake, glänzende Folie hergestellt werden kann.

Entsprechend der Menge und der Art des zugegebenen COCs kann der Weißgrad und die Opazität der Folie exakt eingestellt und den jeweiligen Anforderungen angepasst werden. Durch diese Maßnahme ist es möglich, auf andere gängige weiß- und opakmachende Additive weitgehend zu verzichten. Weiterhin war es sehr überraschend, daß die Oberflächenrauhigkeit der Folie wesentlich geringer und damit der Glanz der Folie wesentlich höher ist, als bei vergleichbaren Folien nach dem Stand der Technik. Geradezu sensationell war der zusätzliche Effekt, daß das Regenerat trotz der Anwesenheit von UV-Stabilisator keinerlei Neigung zur Gelbfärbung zeigt, wie dies bei dem Einsatz polymerer Additive und empfindlicher UV-Stabilisatoren nach dem Stand der Technik beobachtet wird.

Alle diese beschriebenen Merkmale waren nicht vorhersehbar. Dies umso mehr, da COCs zwar offensichtlich mit Polyethylenterephthalat weitgehend inkompatibel sind, bekanntlich aber mit ähnlichen Streckverhältnissen und Strecktemperaturen orientiert werden wie Polyethylenterephthalat. Unter diesen Voraussetzungen hätte der Fachmann

erwartet, daß bei
diesen Herstellbedingungen keine weiße, opake Folie mit hohem Glanz produziert werden kann.

In den bevorzugten und den besonders bevorzugten Ausführungsformen zeichnet sich die erfindungsgemäße Folie durch einen hohen/bzw. durch einen besonders hohen Weißgrad und eine hohe/bzw. durch eine besonders hohe Opazität aus, wobei die Farbänderung der Folie durch die Regeneratzugabe äußerst gering bleibt.

Die erfindungsgemäße Folie enthält mindestens einen UV-Stabilisator als Lichtschutzmittel, der vorzugsweise über die sogenannte Masterbatch-Technologie direkt bei der Folienherstellung zudosiert wird, wobei die Menge an UV-Stabilisator im Bereich zwischen 0,01 und 5 Gew.-%, bezogen auf das Gewicht der Basisschicht, liegt.

Licht, insbesondere der ultraviolette Anteil der Sonnenstrahlung, d. h. der Wellenlängenbereich von 280 bis 400 nm, induziert bei Thermoplasten Abbauvorgänge, als deren Folge sich nicht nur das visuelle Erscheinungsbild durch eintretende Farbänderung bzw. Vergilbung ändert, sondern durch die auch die mechanisch-physikalischen Eigenschaften der Formteile oder Folien aus den Thermoplasten äußerst negativ beeinflußt werden.

Die Unterbindung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360 nm UV-Licht zu absorbieren, ihre Absorption nimmt unterhalb von 320 nm beachtlich zu und ist unterhalb von 300 nm sehr ausgeprägt. Die maximale Absorption liegt im Bereich zwischen 280 und 300 nm.

In Gegenwart von Sauerstoff werden hauptsächlich Kettenspaltungen, jedoch keine Vernetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in $\alpha$-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren, d.h. UV-Absorber als Lichtschutzmittel, sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für hell gefärbte oder gar transparente Folien ungeeignet, da sie zur Verfärbung oder Farbänderung führen.

Geeignete UV-Stabilisatoren als Lichtschutzmittel sind UV-Stabilisatoren, die mindestens 70 %, vorzugsweise 80 %, besonders bevorzugt 90 %, des UV-Lichts im Wellenlängenbereich von 180 nm bis 380 nm, vorzugsweise 280 bis 350 nm absorbieren. Diese sind insbesondere dann geeignet, wenn sie im Temperaturbereich von 260 bis 300 °C thermisch stabil sind, d.h. sich nicht in Spaltprodukte zersetzen und nicht zur Ausgasung führen. Geeignete UV-Stabilisatoren als Lichtschutzmittel sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine, wobei die 2-Hydroxybenzotriazole und die Triazine bevorzugt sind.

Es war für die Fachwelt völlig überraschend, daß der Einsatz der erfindungsgemäßen Kombination aus COC plus UV-Stabilisatoren zu brauchbaren Folien mit hervorragenden Eigenschaften führte. Der Fachmann hätte vermutlich zunächst versucht, eine gewisse UV-Stabilität über einen Oxidationsstabilisator zu erreichen, hätte jedoch nach Bewitterung sofort festgestellt, daß die Folie schnell gelb wird.

Vor dem Hintergrund, daß UV-Stabilisatoren, die das UV-Licht absorbieren und somit Schutz bieten, aus der Literatur bekannt sind, hätte der Fachmann dann wohl handelsübliche UV-Stabilisatoren eingesetzt. Dabei hätte er festgestellt, daß

- der UV-Stabilisator eine mangelnde thermische Stabilität hat und sich bei Temperaturen zwischen 200 und 240 °C in Spaltprodukte zersetzt oder ausgast
- er große Mengen (ca. 10 bis 15 Gew.-%) an UV-Stabilisator einarbeiten muß, damit das UV-Licht wirklich wirksam absorbiert wird und damit die Folie nicht geschädigt wird.

Bei diesen hohen Konzentrationen hätte er aber festgestellt, daß die Folie schon nach der Herstellung gelb ist, bei Gelbzahlunterschieden (YID) um die 25. Des weiteren hätte er festgestellt, daß die mechanischen Eigenschaften negativ beeinflußt werden. Beim Verstrecken hätte er ungewöhnliche Probleme bekommen wie

- Abrisse wegen mangelnder Festigkeit, d.h. E-Modul;
- Düsenablagerungen, was zu Profilschwankungen führt;
- Walzenablagerungen vom UV-Stabilisator, was zur Beeinträchtigung der optischen Eigenschaften (schlechte Trübung, Klebedefekt, inhomogene Oberfläche) führt;

- Ablagerungen in Streck- und Fixierrahmen, die auf die Folie tropfen.

Daher war es mehr als überraschend, daß bereits mit niedrigen Konzentrationen des erfindungsgemäßen UV-Stabilisators ein hervorragender UV-Schutz erzielt wurde. Sehr überraschend war, daß sich bei diesem hervorragenden UV-Schutz

- der Gelbwert der Folie im Vergleich zu einer nicht-stabilisierten Folie im Rahmen der Meßgenauigkeit nicht ändert;
- keine Ausgasungen, keine Düsenablagerungen, keine Rahmenausdampfungen einstellten, wodurch die Folie eine exzellente Optik und ein ausgezeichnetes Profil aufweist und eine ausgezeichnete Planlage besitzt.;
- sich die UV-stabilisierte Folie durch eine hervorragende Streckbarkeit auszeichnet, so daß sie verfahrenssicher und stabil auf sogenannten »high speed film lines« bis zu Geschwindigkeiten von 420 m/min produktionssicher hergestellt werden kann. Damit ist die Folie auch wirtschaftlich rentabel.

Des weiteren ist es sehr überraschend, daß auch das Regenerat wieder einsetzbar ist, ohne den Gelbwert der Folie negativ zu beeinflussen.

Die erfindungsgemäße Folie enthält ggf. zusätzlich einen optischen Aufheller, wobei der optische Aufheller in Mengen im Bereich von 0 bis 50.000 ppm, insbesondere von 20 bis 30.000 ppm, besonders bevorzugt von 50 bis 25.000 ppm, bezogen auf das Gewicht des Polyesterrohstoffs, eingesetzt wird. Vorzugsweise wird der optische Aufheller über die sogenannte Masterbatch-Technologie bei der Folienherstellung dem Polyesterrohstoff zudosiert.

Die ggf. zudosierten optischen Aufheller sind in der Lage, UV-Strahlen im Bereich von 360 bis 380 nm zu absorbieren und als längerwelliges, sichtbares blauviolettes Licht wieder abzugeben.

Geeignete optische Aufheller sind Bis-benzoxazole, Phenylcumarine und Bissterylbiphenyle, insbesondere Phenylcumarin, besonders bevorzugt sind Triazinphenylcumarin, die unter der Produktbezeichnung ® Tinopal bei Ciba-Geigy, Basel, Schweiz, erhältlich sind, oder ® Hostalux KS (Clariant, Deutschland) sowie ® Eastobrite OB-1 (Eastman).

Sofern zweckmäßig können neben dem optischen Aufheller auch noch in Polyester lösliche blaue Farbstoffe zugesetzt werden. Als geeignete blaue Farbstoffe haben sich Kobaltblau, Ultramarinblau und Anthrachinonfarbstoffe, insbesondere ® Sudanblau 2 (BASF, Ludwigshafen, Bundesrepublik Deutschland) erwiesen.

Die blauen Farbstoffe werden in Mengen von 0 bis 10.000 ppm, insbesondere 20 bis 5.000 ppm, besonders bevorzugt 50 bis 1.000 ppm, bezogen auf das Gewicht des Polyesterrohstoffs, eingesetzt.

In einer ganz besonders bevorzugten Ausführungsform enthält die erfindungsgemäße Folie 0,1 bis 5,0 Gew.-% 2-(4,6-Diphenyl-1,3,5-triazin-2-yl)-5-(hexyl)oxy-phenol der Formel:

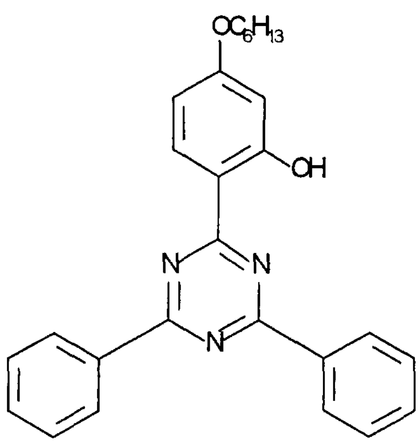

oder 0,1 bis 5,0 Gew.-% 2,2-Methylen-bis(6-(2H-benzotriazol-2-yl)-4-(1,1,2,2-tetramethylpropyl)-phenol der Formel

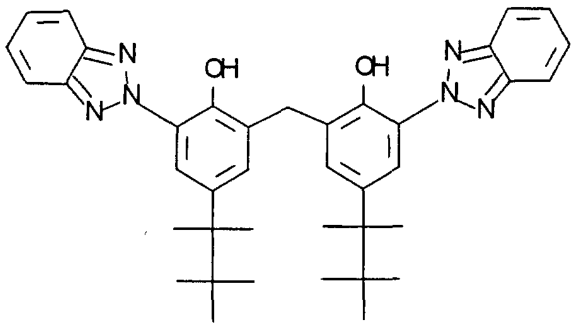

In einer weiteren Ausführungsform können auch Mischungen dieser beiden UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel vorzugsweise zwischen 0,1 und 5,0 Gew.-% liegt, bezogen auf das Gewicht der Basisschicht, besonders bevorzugt im Bereich von 0,5 bis 3,0 Gew.-%.

Die erfindungsgemäße Folie ist einschichtig oder mehrschichtig. Einschichtige Ausführungsformen sind wie die nachstehend beschriebene COC-haltige Schicht aufgebaut. Mehrschichtige Ausführungsformen sind mindestens zweischichtig und umfassen immer die COC-haltige Schicht und zumindest eine weitere Schicht, wobei die COC-haltige Schicht die Basisschicht ist, aber zusätzlich auch die Zwischen- oder die Deckschicht der mehrschichtigen Folie bilden kann. In einer bevorzugten Ausführungsform bildet die COC-haltige Schicht die Basisschicht der Folie mit mindestens einer, vorzugsweise mit beidseitigen Deckschicht/en, wobei gegebenenfalls einseitig eine oder beidseitig Zwischenschicht/en vorhanden sein kann/können. In einer weiteren bevorzugten Ausführungsform bildet die COC-haltige Schicht auch eine Zwischenschicht der Mehrschichtfolie. Weitere Ausführungsformen mit COC-haltigen Zwischenschichten sind fünfschichtig aufgebaut und haben neben der COC-haltigen Basisschicht beidseitig COC-haltige Zwischenschichten. In einer weiteren Ausführungsform kann die COC-haltige Schicht zusätzlich zur Basisschicht, ein- oder beidseitig Deckschicht/en auf der Basis- oder Zwischenschicht bilden. Die Basisschicht ist im Sinne der vorliegenden Erfindung diejenige Schicht, die mehr als 50 bis 100 %, vorzugsweise 70 bis 90 %, der Gesamtfoliendicke ausmacht. Die Deckschicht ist die Schicht, welche die äußere Schicht der Folie bildet.

Die jeweilige Ausführungsform der Erfindung ist eine nicht transparente, opake Folie. Unter nicht transparenten Folien werden im Sinne der vorliegenden Erfindung solche Folien verstanden, deren Lichtdurchlässigkeit nach ASTM-D 1003-77 unter 95 %, vorzugsweise unter 75 %, liegt.

Die COC-haltige Schicht (die Basisschicht) der erfindungsgemäßen Folie enthält einen Polyesterrohstoff, vorzugsweise ein Polyesterhomopolymeres, ein COC, den UV-Stabilisator sowie gegebenenfalls weitere zugesetzte Additive in jeweils wirksamen Mengen. Im allgemeinen enthält diese Schicht mindestens 20 Gew.-%, vorzugsweise 40 bis 98 Gew. -%, insbesondere 70 bis 96 Gew. -%, Polyesterrohstoff, bezogen auf das Gewicht der Schicht.

Die Basisschicht der Folie enthält einen thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (=Polyethylen-2,6-naphthalat, PEN), aus 1,4-Bis-hydroximethyl-cyclohexan und Terephthalsäure (=Poly-1,4-cyclohexandimethylenterephthalat, PCDT) sowie aus Ethylenglykol, Naphthalin-2,6-dicarbonsäure und Biphenyl-4,4'-dicarbonsäure (=Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (A=Deckschicht 1) oder der Schicht C (C=Deckschicht 2) einer mehrschichtigen Folie ABC (B=Basisschicht) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei Xfür-$CH_2$-, -$C(CH_3)_2$-, -$C(CF_3)_2$-, -O-, -S- oder-$SO_2$-steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$)-Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Erfindungsgemäß enthält die COC-haltige Schicht bzw. die Folie bei einschichtigen Ausführungsformen ein Cycloolefincopolymeres (COC) in einer Menge von minimal 2,0 Gew.-%, bevorzugt 4 bis 50 Gew.-% und besonders bevorzugt 6 bis 40 Gew.-%, bezogen auf das Gewicht der Schicht bzw. bezogen auf das Gewicht der Folie bei einschichtigen Ausführungsformen. Es ist wesentlich für die vorliegende Erfindung, daß das COC mit dem Polyethylenterephthalat nicht verträglich ist und mit diesem keine homogene Mischung in der Schmelze bildet.

Cycloolefinpolymere sind Homopolymerisate oder Copolymerisate, welche polymerisierte Cycloolefineinheiten und gegebenenfalls acyclische Olefine als Comonomer enthalten. Für die vorliegende Erfindung sind Cycloolefinpolymere geeignet, die 0,1 bis 100 Gew.-%, bevorzugt 10 bis 99 Gew.-%, besonders bevorzugt 50-95 Gew.-%, jeweils bezogen auf die Gesamtmasse des Cycloolefinpolymeren, polymerisierte Cycloolefineinheiten enthalten. Bevorzugt sind insbesondere Polymere, die aus den Monomeren der cyclischen Olefinen der Formeln I, II, III, IV, V oder VI aufgebaut sind:

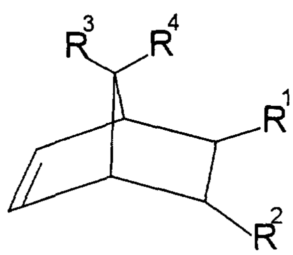
(I)

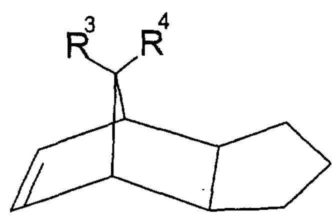
(II)

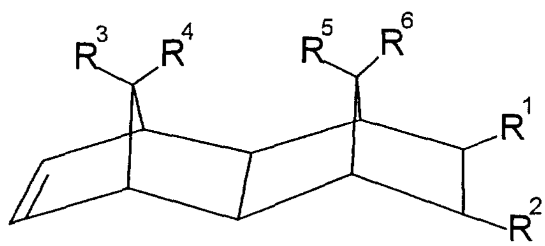
(III)

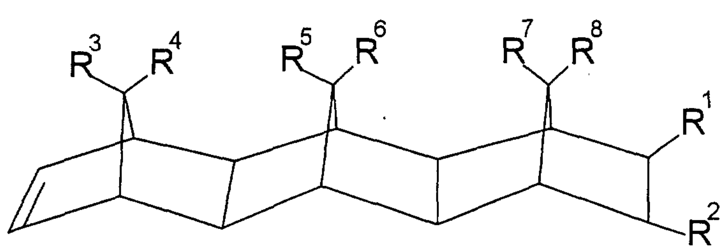
(IV)

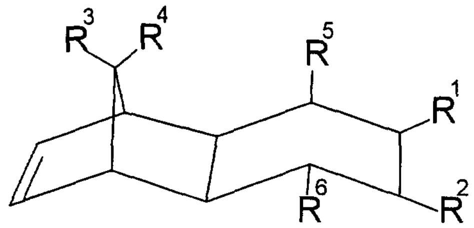

(V)

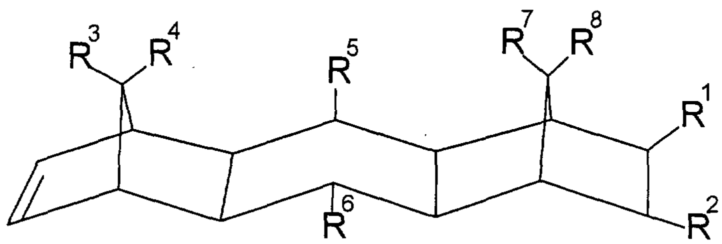

(VI)

In diesen Formeln sind $R^1$, $R^2$, $R^3$, $R^4$, $R^5$, $R^6$, $R^7$ und $R^8$ gleich oder verschieden und bedeuten ein Wasserstoffatom oder einen $C_1$-$C_{30}$-Kohlenwasserstoffrest; oder zwei oder mehrere der Reste $R^1$ bis $R^8$ sind cyclisch verbunden, wobei gleiche Reste in den verschiedenen Formeln gleiche oder unterschiedliche Bedeutung haben. $C_1$-$C_{30}$-Kohlenwasserstoffreste sind beispielsweise lineare oder verzweigte $C_1$-$C_8$-Alkylreste, $C_6$-$C_{18}$-Arylreste, $C_7$-$C_{20}$-Alkylenarylreste oder cyclische $C_3$-$C_{20}$-Alkylreste oder acyclische $C_2$-$C_{20}$-Alkenylreste.

Gegebenenfalls können die COCs 0 bis 45 Gew.-%, bezogen auf die Gesamtmasse des Cycloolefinpolymeres, polymerisierte Einheiten mindestens eines monocyclischen Olefins der Formel VII enthalten:

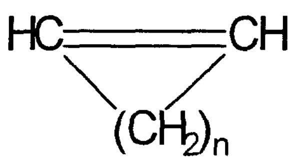

(VII)

Hierin ist n eine Zahl von 2 bis 10.

Gegebenenfalls können die COCs 0 bis 99 Gew.-%, bezogen auf die Gesamtmasse an COC, polymerisierte Einheiten eines acyclischen Olefins der Formel VIII enthalten:

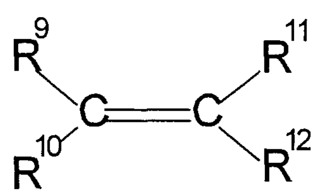

(VIII)

Hierin sind $R^9$, $R^{10}$, $R^{11}$, und $R^{12}$ gleich oder verschieden und bedeuten ein Wasserstoffatom oder $C_1$-$C_{10}$-Kohlenwasserstoffreste, z.B. einen $C_1$-$C_8$-Alkylrest oder $C_6$-$C_{14}$-Arylrest.

Ebenfalls prinzipiell geeignet sind Cycloolefinpolymere, welche durch ringöffnende Polymerisation mindestens eines der Monomere der Formeln I bis VI und anschließende Hydrierung erhalten werden.

Cycloolefinhomopolymere sind aus einem Monomeren der Formeln I-VI aufgebaut. Diese Cycloolefin-Polymere sind für die Zwecke der vorliegenden Erfindung weniger geeignet. Für die Zwecke der vorliegenden Erfindung sind Cycloolefincopolymerisate (COC) geeignet, welche mindestens ein Cycloolefin der Formeln I bis VI und acyclische

Olefine der Formel VIII als Comonomer enthalten. Dabei sind als acyclische Olefine solche bevorzugt, die 2 bis 20 C-Atome aufweisen, insbesondere unverzweigte acyclische Olefine mit 2 bis 10 C-Atomen wie beispielsweise Ethylen, Propylen und/oder Butylen. Der Anteil polymerisierter Einheiten acyclischer Olefine der Formel VIII beträgt bis zu 99 Gew.-%, bevorzugt 5 bis 80 Gew.-%, besonders bevorzugt 10 bis 60 Gew.-%, bezogen auf das Gesamtgewicht des jeweiligen COCs.

Unter den vorstehend beschriebenen COCs sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind auch COCs, die polymerisierte Einheiten acyclischer Olefine, insbesondere Ethylen, enthalten. Wiederum besonders bevorzugt sind Norbornen/Ethylen- und Tetracyclododecen/Ethylen-Copolymere, welche 5 bis 80 Gew.-%, vorzugsweise 10 bis 60 Gew.-%, Ethylen enthalten (bezogen auf das Gewicht des Copolymeren).

Die vorstehend generisch beschriebenen Cycloolefinpolymeren weisen im allgemeinen Glasübergangstemperaturen zwischen -20 °C und 400 °C auf. Für die Erfindung sind COCs verwendbar, die eine Glasübergangstemperatur von größer als 70 °C, vorzugsweise größer als 90 °C und insbesondere größer als 110 °C aufweisen. Die Viskositätszahl (Dekalin, 135 °C, DIN 53 728) liegt zweckmäßigerweise zwischen 0,1 und 200 ml/g, bevorzugt zwischen 50 und 150 ml/g.

Die Herstellung der COCs geschieht durch eine heterogene oder homogene Katalyse mit metallorganischen Verbindungen und ist in einer Vielzahl von Dokumenten beschrieben. Geeignete Katalysatorsysteme basierend auf Mischkatalysatoren aus Titan- bzw. Vanadiumverbindungen in Verbindung mit Aluminiumorganylen werden in DD 109 224, DD 237 070 und EP-A-0 156 464 beschrieben. EP-A-0 283 164, EP-A-0 407 870, EP-A-0 485 893 und EP-A-0 503 422 beschreiben die Herstellung von COCs mit Katalysatoren, basierend auf löslichen Metallocenkomplexen. Auf die in obengenannten Schriften beschriebenen Herstellungsverfahren von COC wird hiermit ausdrücklich Bezug genommen.

Die COCs werden entweder als reines Granulat oder als granuliertes Konzentrat (Masterbatch) in die Folie eingearbeitet, indem das Polyestergranulat oder -pulver mit dem COC bzw. dem COC-Masterbatch vorgemischt und anschließend dem Extruder zugeführt wird. Im Extruder werden die Komponenten weiter vermischt und auf Verarbeitungstemperatur erwärmt. Dabei ist es für das erfindungsgemäße Verfahren zweckmäßig, daß die Extrusionstemperatur oberhalb der Glasübergangstemperatur $T_g$ des COCs liegt, im allgemeinen mindestens 5°C, vorzugsweise 10 bis 180 °C, insbesondere 15 bis 150 °C, über der Glasübergangstemperatur des COCs.

Für die Zwischenschichten und für die Deckschichten können prinzipiell die gleichen Polymeren verwendet werden, wie für die Basisschicht. Daneben können in den Deckschichten auch andere Materialien enthalten sein, wobei dann die Deckschichten bevorzugt aus einem Gemisch von Polymeren, einem Copolymeren oder einem Homopolymeren, bestehen, welches Ethylen-2,6-naphthalat-Einheiten und Ethylenterephthalat-Einheiten enthalten. Bis zu 30 Mol-% der Polymeren können aus weiteren Comonomeren (z.B. Ethylen-isophthalat-Einheiten.) bestehen.

Die Basisschicht und die anderen Schichten können zusätzlich übliche Additive, wie Stabilisatoren, Antiblockmittel und andere Füller, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikel, z.B. Polystyrol- oder Acrylat-Partikel.

Als Additive können auch Mischungen von zwei und mehreren verschiedenen Antiblockmitteln oder Mischungen von Antiblockmitteln gleicher Zusammensetzung, aber unterschiedlicher Partikelgröße gewählt werden. Die Partikel können den Polymeren der einzelnen Schichten der Folie in den jeweils vorteilhaften Konzentrationen, z.B. als glykolische Dispersion während der Polykondensation oder über Masterbatche bei der Extrusion zugegeben werden. Als besonders geeignet haben sich Pigmentkonzentrationen von 0 bis 25 Gew.-% erwiesen (bezogen auf das Gewicht der jeweiligen Schicht). Eine detaillierte Beschreibung der Antiblockmittel findet sich beispielsweise in der EP-A-0 602 964.

Zu Verbesserung des Weißgrades der Folie kann die Basisschicht oder die anderen zusätzlichen Schichten eine weitere Pigmentierung enthalten. Hierbei hat es sich als besonders günstig erwiesen, als zusätzliche Additive Bariumsulfat mit einer Korngröße von 0,3 bis 0,8 µm, vorzugsweise von 0,4 bis 0,7 µm oder Titandioxid mit einer Korngröße von 0,05 bis 0,3 µm, auszuwählen. Die Folie erhält hierdurch ein brillantem, weißes Aussehen. Die Menge an Bariumsulfat oder Titandioxid liegt im Bereich von 1 bis 25 Gew.-%, vorzugsweise von 1 bis 20 Gew.-%, und ganz bevorzugt von 1 bis 15 Gew.-%.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 4

bis 400 µm, wobei 8 bis 300 µm, insbesondere 10 bis 300 µm, bevorzugt sind. Die Dicke der gegebenenfalls vorhandenen Zwischenschicht/en beträgt im allgemeinen jeweils unabhängig voneinander 0,5 bis 15 µm, wobei Zwischenschichtdicken von 1 bis 10 µm, insbesondere 1 bis 8 µm, bevorzugt sind. Die angegebenen Werte beziehen sich jeweils auf eine Zwischenschicht. Die Dicke der Deckschicht/en wird unabhängig von den anderen Schichten gewählt und liegt bevorzugt im Bereich von 0,1 bis 10 µm, insbesondere von 0,2 bis 5 µm, vorzugsweise von 0,3 bis 2 µm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Die Erfindung betrifft weiterhin ein Verfahren zur Herstellung der erfindungsgemäßen Polyesterfolie nach dem an sich bekannten Extrusions- oder Koextrusionsverfahren.

Im Rahmen dieses Verfahrens wird so vorgegangen, daß die der einschichtigen Folie/die den einzelnen Schichten der Folie entsprechende Schmelze/entsprechenden Schmelzen durch eine Flachdüse extrudiert/koextrudiert wird/werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Verstreckung wird im allgemeinen sequentiell durchgeführt. Dabei wird vorzugsweise zuerst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung erfolgt bevorzugt mit Hilfe zweier entsprechend dem angestrebten Streckverhältnis verschieden schnell rotierender Walzen. Zum Querverstrecken benutzt man allgemein einen entsprechenden Kluppenrahmen.

Eine simultane, d.h. gleichzeitige Verstreckung der erfindungsgemäßen Folie in beiden Richtungen (MD-Richtung und TD-Richtung) mit Hilfe eines dafür geeigneten Kluppenrahmens hat sich als nicht zweckmäßig erwiesen. Diese Streckung führt nämlich zu einer Folie, die einen zu geringen Weißgrad und eine zu geringe Opazität aufweist.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie etwa 0,1 bis 10 s lang bei einer Temperatur von 150 bis 250 °C gehalten. Anschließend wird die Folie abgekühlt und dann in üblicher Weise aufgewickelt.

Zur Einstellung weiterer gewünschter Eigenschaften kann die Folie chemisch behandelt werden oder auch corona- bzw. flammbehandelt sein. Die Behandlungsintensität ist so gewählt, daß die Oberflächenspannung der Folie im allgemeinen über 45 mN/m liegt.

Ebenso kann die Folie zur Einstellung weiterer Eigenschaften beschichtet werden. Typische Beschichtungen sind haftvermittelnde, antistatisch, schlupfverbessernd oder dehäsiv wirkende Schichten. Es bietet sich an, diese zusätzlichen Schichten über in-line coating mittels wässriger Dispersionen vor der Querverstreckung auf die Folie aufzubringen.

Der besondere Vorteil der erfindungsgemäßen Folie ist ihr hoher Weißgrad und ihre hohe Opazität bei gleichzeitiger UV-Stabilität. Überraschenderweise war der Glanz der Folie ebenfalls sehr hoch. Der Weißgrad der Folie beträgt mehr als 70 %, bevorzugt mehr als 75 % und besonders bevorzugt mehr als 80 %. Die Opazität der erfindungsgemäßen Folie beträgt mehr als 55 %, bevorzugt mehr als 60 % und besonders bevorzugt mehr als 65 %. Der Glanz der erfindungsgemäßen Folie beträgt mehr als 80, bevorzugt mehr als 90 und besonders bevorzugt mehr als 100.

Ein weiterer besonderer Vorteil der Erfindung liegt darin, daß das bei der Herstellung der Folie immanent anfallende Regenerat in einer Konzentration von 10 bis 70 Gew.-%, bezogen auf das Gesamtgewicht der Folie, wieder für die Folienherstellung verwendet werden kann, ohne daß dabei die physikalischen Eigenschaften der Folie nennenswert negativ beeinflußt werden. Insbesondere wird durch das Regenerat (im wesentlichen aus Polyesterrohstoff und COC bestehend) die Folie nicht undefiniert in der Farbe verändert, was bei den Folien nach dem Stand der Technik der Fall ist.

Darüber hinaus besteht ein Vorteil der Erfindung darin, daß die Herstellkosten der erfindungsgemäßen Folie vergleichbar sind mit herkömmlichen opaken Folien nach dem Stand der Technik. Die sonstigen verarbeitungs- und gebrauchsrelevanten Eigenschaften der erfindungsgemäßen Folie bleiben im wesentlichen unverändert oder sind sogar verbessert.

Die Folie eignet sich hervorragend zur Verpackung von licht-und/oder luftempfindlichen Nahrungs- und Genußmitteln. Daneben ist sie auch hervorragend für den Einsatz im industrieellen Bereich, z.B. bei der Herstellung von Prägefolien oder als Etikettenfolie, geeignet. Daneben ist die Folie natürlich besonders geeignet für Bildaufzeichnungspapiere, Druckbögen, magnetische Aufzeichnungskarten, um nur einige mögliche Anwendungen zu nennen.

Das Verabeitungs- und das Wickelverhalten der Folie, insbesondere auf schnelllaufenden Maschinen (Wickler, Metallisierer, Druck- und Kaschiermaschinen) ist ausgesprochen gut. Ein Maß für das Verarbeitungsverhalten ist der Reibungskoeffizient der Folie, der kleiner als 0,6 ist. Das Wickelverhalten wird neben einem guten Dickenprofil, einer hervorragender Planlage und niedriger Reibungskoeffizienten entscheidend durch die Rauhigkeit der Folie beeinflußt. Es hat sich herausgestellt, daß die Wickelung der erfindungsgemäßen Folie insbesondere dann gut ist, wenn unter Einbehalt der anderen Eigenschaften die mittlere Rauhigkeit in einem Bereich von 50 bis 250 nm liegt. Die Rauhigkeit läßt sich u.a. durch Variation der COC-Konzentration und der Verfahrensparameter beim Herstellungsprozess im angegebenen Bereich variieren.

Die nachstehende Tabelle (Tabelle 1) fasst die wichtigsten erfindungsgemäßen Folieneigenschaften noch einmal besonders illustrativ zusammen.

**Tabelle 1**

| | Erfindungsgemäßer Bereich | bevorzugt | besonders bevorzugt | Einheit | Messmethode |
|---|---|---|---|---|---|
| Formulierung | | | | | |
| Menge an COC in der Basisschicht | 2 - 60 | 4 - 50 | 6 - 40 | % | |
| Glasübergangstemp. des COCs | 70 - 270 | 90 - 250 | 110 - 220 | °C | DIN 73 765 |
| UV-Stabilisator | 0,01 - 5,0 | 0,1 - 5,0 | 0,5 - 3,0 | % | Bewitterung mit Atlas Ci 65 Weather Ometer |
| Folieneigenschaften | | | | | |
| Weißgrad | > 70 | > 75 | > 80 | % | Berger |
| Opazität | > 55 | > 60 | > 65 | % | DIN 53 146 |
| COF | < 0,6 | < 0,55 | < 0,5 | | DIN 53 375 |
| Glanz | > 80 | > 90 | > 100 | | DIN 67 530 |
| Mittlere Rauhigkeit $R_a$ | 50-250 | 60-230 | 70-200 | nm | DIN 4768, Cut-off von 0,25 mm |

Zur Charakterisierung der Rohstoffe und der Folien wurden die folgenden Meßwerte benutzt:

**SV (DCE), IV (DCE)**

Die Standardviskosität SV (DCE) wird angelehnt an DIN 53726 in Dichloressigsäure gemessen. Die intrinsische Viskosität (IV) berechnet sich wie folgt aus der Standardviskosität (SV)

$$IV (DCE) = 6{,}67 \cdot 10^{-4} SV (DCE) + 0{,}118$$

**Oberflächendefekte, homogene Einfärbung**

Die Oberflächendefekte und die homogene Einfärbung werden visuell bestimmt.

**Bewitterung (beidseitig); UV-Stabilität**

Die UV-Stabilität wird nach der Testspezifikation ISO 4892 wie folgt geprüft

| | |
|---|---|
| Testgerät | Atlas Ci 65 Weather Ometer |
| Testbedingungen | ISO 4892, d. h. künstliche Bewitterung |
| Bestrahlungszeit | 1000 Stunden (pro Seite) |
| Bestrahlung | 0,5 W/m$^2$, 340 nm |
| Temperatur | 63 °C |
| Relative Luftfeuchte | 50 % |
| Xenonlampe | innerer und äußerer Filter aus Borosilikat |
| Bestrahlungszyklen | 102 Minuten UV-Licht, dann 18 Minuten UV-Licht mit Wasserbesprühung der Proben, dann wieder 102 Minuten UV-Licht usw. |

**Reibung**

Die Reibung wurde nach DIN 53 375 bestimmt. Die Gleitreibungszahl wurde 14 Tage nach der Produktion gemessen.

**Oberflächenspannung**

Die Oberflächenspannung wurde mittels der sogenannten Tintenmethode (DIN 53 364) bestimmt.

**Rauhigkeit**

Die Rauhigkeit Ra der Folie wurde nach DIN 4768 bei einem Cut-off von 0,25 mm bestimmt.

**Weißgrad und Opazität**

Die Bestimmung des Weißgrades und der Opazität erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert.
WG = Weißgrad, RY, RZ, RX = entsprechende Reflexionsfaktoren bei Einsatz des Y-, Z- und X-Farbmessfilters. Als Weißstandard wir ein Pressling aus Bariumsulfat (DIN 5033, Teil 9) verwendet. Eine ausführliche Beschreibung ist z. B. in Hansl Loos "Farbmessung","Verlag Beruf und Schule, Itzehoe (1989), beschrieben.

**Lichtdurchlässigkeit**

Die Lichtdurchlässigkeit wird in Anlehnung an ASTM-D 1033-77 gemessen.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

**Glasübergangstemperatur**

Die Glasübergangstemperatur $T_g$ wurde anhand von Folienproben mit Hilfe der DSC (Differential Scanning Calorimetry) bestimmt (DIN 73 765). Verwendet wurde ein DSC 1090 der Firma DuPont. Die Aufheizgeschwindigkeit betrug 20 K/min und die Einwaage ca. 12 mg. Im ersten Aufheizvorgang wurde der Glasübergang $T_g$ ermittelt. Die Proben zeigten vielfach eine Enthalpierelaxation (ein Peak) zu Beginn des stufenförmigen Glasübergangs. Als $T_g$ wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet.

**Beispiel 1** (erfindungsgemäß)

Chips aus Polyethylenterephthalat (hergestellt über das Umesterungsverfahren mit Mn als Umesterungskatalysator, Mn-Konzentration: 100 ppm) wurden bei 150 °C auf eine Restfeuchte von unterhalb 100 ppm getrocknet und dem Extruder für die Basisschicht B zugeführt. Daneben wurden Chips aus COC der Fa. Ticona: ® Topas 6015 (COC bestehend aus 2-Norbornen und Ethylen, siehe auch W. Hatke: Folien aus COC, Kunststoffe 87 (1997) 1, S. 58-62) mit einer Glasübergangstemperatur $T_g$ von etwa 160 °C ebenfalls dem Extruder für die Basisschicht B zugeführt. Der mengenmäßige Anteil des Cycloolefincopolymeren (COC) an der Gesamtfolie betrug 10 Gew.-%. Außerdem wurde 1,0 Gew.-% des UV-Stabilisators 2-(4,6-Diphenyl-1,3,5-triazin-2-yl)-5-(hexyl)oxyphenol (®Tinuvin 1577 der Firma Ciba-Geigy, Basel, Schweiz) zugegeben. Tinuvin 1577 hat einen Schmelzpunkt von 149°C und ist bis ca. 330°C thermisch stabil.

Es wurde durch Extrusion und anschließende stufenweise Orientierung in Längs- und Querrichtung eine weiße, opake einschichtige Folie und einer Gesamtdicke von 23 µm hergestellt.

Basisschicht B, Mischung aus:

| | |
|---|---|
| 89,0 Gew. -% | Polyethylenterephthalat-Homopolymer mit einem SV-Wert von 800 |
| 10,0 Gew.-% | Cycloolefincopolymeren (COC) der Fa. Ticona, Topas 6015 |
| 1,0 Gew.-% | Tinuvin 1577 |

Die Herstellungsbedingungen in den einzelnen Verfahrensschritten waren:

| | | |
|---|---|---|
| Extrusion | Temperaturen Basis-Schicht | 280 °C |
| | Temperatur der Abzugswalze | 30 °C |
| Längsstreckung | Temperatur | 80 - 125 °C |
| | Längsstreckverhältnis | 4,2 |
| Querstreckung | Temperatur | 80 - 135 °C |
| | Querstreckverhältnis | 4,0 |
| Fixierung | Temperatur | 230 °C |
| | Dauer | 3 s |

Die Folie hatte die geforderten guten Eigenschaften und zeigte das gewünschte Handling und das gewünschte Verarbeitungsverhalten. Die erzielten Eigenschaften derart hergestellter Folien sind in der Tabelle 2 dargestellt.

**Beispiel 2** (erfindungsgemäß)

Im Vergleich zu Beispiel 1 wurde jetzt in die Basisschicht 50 Gew.-% Regenerat dazugegeben. Die Menge an COC in der damit hergestellten Folie betrug wiederum 10 Gew.-%, die an UV-Stabilisator 1 Gew.-%. Die Verfahrensparameter wurden im Vergleich zu Beispiel 1 nicht geändert. Es wurde die Gelbverfärbung der Folie visuell beobachtet. Anhand der Tabelle 2 sieht man, daß kaum eine Gelbverfärbung der Folie sichtbar geworden ist.

Basisschicht B, Mischung aus:

| | |
|---|---|
| 45,0 Gew.-% | Polyethylenterephthalat-Homopolymermit einem SV-Wert von 800 |

(fortgesetzt)

| | |
|---|---|
| 50,0 Gew.-% | Regenerat (90 Gew.-% Polyester + 10 Gew.-% Topas 6015 + 1 Gew.-% Tinuvin 1577) |
| 5,0 Gew.-% | Cycloolefincopolymeren (COC) der Fa. Ticona, Topas 6015 |
| 0,5Gew.-% | Tinuvin 1577 |

**Beispiel 3** (erfindungsgemäß)

Im Vergleich zu Beispiel 1 wurde jetzt eine Folie mit einer Dicke von 96 µm hergestellt. Die Menge an COC in der Folie betrug 8 Gew.-%, die an Tinuvin 1577 1 Gew.-%. Die Verfahrensparameter wurden im Vergleich zu Beispiel 1 nicht geändert. Es wurde die Gelbverfärbung der Folie visuell beobachtet. Anhand der Tabelle 2 sieht man, daß keine Gelbverfärbung der Folie sichtbar geworden ist.

Basisschicht B, Mischung aus:

| | |
|---|---|
| 91,0 Gew.-% | Polyethylenterephthalat-Homopolymermit einem SV-Wert von 800 |
| 8,0 Gew.-% | Cycloolefincopolymeren (COC) der Fa. Ticona, Topas 6015 |
| 1,0Gew.-% | Tinuvin 1577 |

**Beispiel 4** (erfindungsgemäß)

Im Vergleich zu Beispiel 3 wurde jetzt in die Basis 50 Gew.-% Regenerat dazugegeben. Die Menge an COC in der Folie betrug wiederum 8 Gew.-%, die an Tinuvin 1577 1 Gew.-%. Die Verfahrensparameter wurden im Vergleich zu Beispiel 1 nicht geändert. Es wurde die Gelbverfärbung der Folie visuell beobachtet. Anhand der Tabelle 2 sieht man, daß kaum eine Gelbverfärbung der Folie sichtbar geworden ist.

Basisschicht B, Mischung aus:

| | |
|---|---|
| 55,0 Gew.-% | Polyethylenterephthalat-Homopolymer mit einem SV-Wert von 800 |
| 50,0 Gew.-% | Eigenregenerat (90 Gew.-% Polyester + 10 Gew.-% Topas 6015 + 1 Gew.-% Tinuvin 1577) |
| 4,0 Gew.-% | Cycloolefincopolymeren (COC) der Fa. Ticona, Topas 6015 |
| 0,5Gew.-% | Tinuvin 1577 |

**Vergleichsbeispiel 1**

Es wurde Beispiel 1 aus der DE-A 2 353 347 nachgearbeitet. In Abänderung des Beispiels wurden zusätzlich 50 Gew.-% Regenerat mitverarbeitet. Anhand der Tabelle 2 sieht man, daß eine deutliche Gelbverfärbung der Folie sichtbar geworden ist. Außerdem ist die Rauhigkeit der Folie für viele Anwendungen deutlich zu hoch und der Glanz für viel Anwendungen zu niedrig. Das ist aller Wahrscheinlichkeit auf die Verwendung anderer polymerer Additive zurückzuführen.

Basisschicht B, Mischung aus:

| | |
|---|---|
| 47,5 Gew.-% | Polyethylenterephthalat-Homopolymer mit einem SV-Wertvon 800 |
| 50,0 Gew.-% | Eigenregenerat (95 Gew.-% Polyester + 5 Gew.-% Polypropylen) |
| 2,5 Gew.-% | Polypropylen |

**Vergleichsbeispiel 2**

Es wurde Beispiel 1 aus der EP-A 0 300 060 nachgearbeitet. In Abänderung des Beispiels wurden zusätzlich 50 Gew.-% Regenerat mitverarbeitet. Anhand der Tabelle 2 sieht man, daß eine deutliche Gelbverfärbung der Folie sichtbar geworden ist. Außerdem ist die Rauhigkeit der Folie für viele Anwendungen deutlich zu hoch und der Glanz für viel Anwendungen zu niedrig. Das ist aller Wahrscheinlichkeit auf die Verwendung anderer polymerer Additive zurückzuführen.

Basisschicht B, Mischung aus:

| | |
|---|---|
| 45,0 Gew.-% | Polyethylenterephthalat-Homopolymer mit einem SV-Wert von 800 |
| 50,0 Gew.-% | Eigenregenerat (95 Gew.-% Polyester + 5 Gew.-% Polypropylen) |

(fortgesetzt)

| | |
|---|---|
| 5,0 Gew.-% | Polypropylen |

**Vergleichsbeispiel 3**

Es wurde Beispiel 1 aus der EP-A 0 360 201 nachgearbeitet. In Abänderung des Beispiels wurden zusätzlich 50 Gew.-% Regenerat mitverarbeitet. Anhand der Tabelle 2 sieht man, daß eine deutliche Gelbverfärbung der Folie sichtbar geworden ist. Außerdem ist die Rauhigkeit der Folie für viele Anwendungen deutlich zu hoch und der Glanz für viel Anwendungen zu niedrig. Das ist aller Wahrscheinlichkeit auf die Verwendung anderer polymerer Additive zurückzuführen.
Basisschicht B, Mischung aus:

| | |
|---|---|
| 40,0 Gew.-% | Polyethylenterephthalat-Homopolymermit einem SV-Wert von 800 |
| 50,0 Gew.-% | Eigenregenerat (95 Gew.-% Polyester + 5 Gew.-% Polypropylen) |
| 10,0 Gew.-% | Polypropylen |

**Vergleichsbeispiel 4**

Es wurde Beispiel 1 aus der DE-A 195 40 277 nachgearbeitet. In Abänderung des Beispiels wurden zusätzlich 50 Gew.-% Regenerat mitverarbeitet. Anhand der Tabelle 2 sieht man, daß eine deutliche Gelbverfärbung der Folie sichtbar geworden ist. Außerdem ist die Rauhigkeit der Folie für viele Anwendungen deutlich zu hoch und der Glanz für viel Anwendungen zu niedrig. Das ist aller Wahrscheinlichkeit auf die Verwendung anderer polymerer Additive zurückzuführen.
Basisschicht B, Mischung aus:

| | |
|---|---|
| 43,5 Gew.-% | Polyethylenterephthalat-Homopolymermiteinem SV-Wert von 800 |
| 50,0 Gew.-% | Eigenregenerat (95 Gew.-% Polyester + 5 Gew.-% Polystyrol) |
| 6,5 Gew.-% | Polystyrol |

**Tabelle 2**

| Beispiel | Dicke der Folie µm | Schichtaufbau | Additiv zum Polyesterrohstoff | Konzentration des Additivs in Basisschicht % | Glasübergangstemperatur des Additivs °C | Weißgrad % | Opazität % | Beurteilung des Gelbgrades der Folie | Glanz | Reibung COF A-Seite gegen C-Seite | Mittlere Rauhigkeit $R_a$ nm A-Seite | Mittlere Rauhigkeit $R_a$ nm C-Seite |
|---|---|---|---|---|---|---|---|---|---|---|---|---|
| B 1 | 23 | B | COC | 10 | 170 | 75 | 75 | ++ | 115 | 0,52 | 120 | 120 |
| B 2 | 23 | B | COC | 10 | 170 | 76 | 80 | + | 120 | 0,50 | 110 | 110 |
| B 3 | 96 | B | COC | 8 | 170 | 85 | 85 | ++ | 125 | 0,42 | 100 | 100 |
| B 4 | 96 | B | COC | 8 | 170 | 86 | 90 | + | 130 | 0,35 | 98 | 98 |
| VB 1 | 155 | B | Poly-propylen | 5 | -10 | 80 | 70 | - | 46 | 0,45 | 410 | 410 |
| VB 2 | 100 | B | Poly-propylen | 10 | -10 | 88 | 80 | - | 57 | 0,45 | 180 | 180 |
| VB 3 | 100 | ABA | Poly-propylen | 20 | -10 | 92 | 89 | - | 54 | 0,25 | 370 | 370 |
| VB 4 | 125 | B | Polystyrol | 13 | 100 | 82 | 82 | - | 51 | 0,35 | 480 | 480 |

Zeichenerklärung für den Gelbgrad der produzierten Folien:

++ : keine Gelbfärbung ist zu erkennen

++ : geringe Gelbfärbung ist zu erkennen

\- : deutliche Gelbfärbung ist zu erkennen

Alle nach den Beispielen 1 bis 4 und den Vergleichsbeispielen 1 bis 4 hergestellten Folien wurden je 1000 Stunden Bewitterung pro Seite mit Atlas Ci 65 Weather Ometer ausgesetzt. Die nach den erfindungsgemäßen Beispielen 1 bis 4 hergestellten Folien zeigten keine signifikante Eigenschaftsänderung.

Die Folien der Vergleichsbeispiele 1 bis 4 hingegen zeigten nach 1000 Stunden Bewitterung mit Atlas CI 65 Weather Ometer an den Oberflächen Risse und Versprödungserscheinungen auf. Ein präzises Eigenschaftsprofil -

insbesondere die mechanischen Eigenschaften - konnte daher an diesen Folien nicht mehr gemessen werden. Außerdem zeigen die Folien eine visuell deutlich sichtbare Gelbfärbung.

**Patentansprüche**

1. Weiße, biaxial orientierte und UV-stabilisierte Polyesterfolie umfassend mindestens eine Schicht, **dadurch gekennzeichnet**, daß zumindest diese Schicht ein Cycloolefincopolymeres (COC) in einer Menge von 2 bis 60 Gew.-%, bezogen auf das Gewicht dieser Schicht enthält, wobei die Glasübergangstemperatur des COCs im Bereich von 70 bis 270 °C liegt, und daß die Schicht mindestens einen UV-Stabilisator als Lichtschutzmittel enthält.

2. Polyesterfolie nach Anspruch 1, **dadurch gekennzeichnet**, daß das COC Polynorbornen, Polydimethyloctahydronaphthalin, PolycyclopentenoderPoly(5-methyl)norbornen enthält.

3. Polyesterfolie nach Anspruch 1 oder 2, **dadurch gekennzeichnet**, daß das COC eine Glasübergangstemperatur im Bereich von 90 bis 250 °C aufweist und daß die Menge an UV-Stabilisator im Bereich von 0,01 bis 5,0 Gew.-%, bezogen auf das Gesamtgewicht der Schicht, liegt.

4. Polyesterfolie nach einem der Ansprüche 1 oder 2, **dadurch gekennzeichnet**, daß das Cycloolefincopolymere (COC) eine Glasübergangstemperatur im Bereich von 110 bis 220 °C aufweist und daß der UV-Stabilisator ausgewählt ist aus 2-Hydroxybenzotriazolen und/oder Triazinen.

5. Polyesterfolie nach einem oder mehreren der Ansprüche 1 bis 4, **dadurch gekennzeichnet**, daß die Folie einen Weißgrad von mehr als 70 % aufweist und daß der UV-Stabilisator 2-(4,6-Diphenyl-1,3,5-triazin-2-yl)-5-(hexyl) oxy-phenol und/oder 2,2'-Methylen-bis(6-(2H-benzotriazol-2-yl)-4-(1,1,2,2-tetramethylpropyl)-phenol ist.

6. Polyesterfolie nach einem oder mehreren der Ansprüche 1 bis 5, **dadurch gekennzeichnet**, daß die Folie eine Opazität von mehr als 55 % aufweist.

7. Polyesterfolie nach einem oder mehreren der Ansprüche 1 bis 6, **dadurch gekennzeichnet**, daß die Folie einen Glanz von mehr als 80 aufweist.

8. Polyesterfolie nach einem oder mehreren der Ansprüche 1 bis 7, **dadurch gekennzeichnet**, daß die Schicht 0,5 bis 25 Gew.-% weiterer vakuoleniniziierender und/oder weißer Füllstoffe und/oder Pigment enthält, jeweils bezogen auf das Gewicht der Schicht.

9. Polyesterfolie nach einem oder mehreren der Ansprüche 1 bis 8, **dadurch gekennzeichnet**, daß auf der COC-haltigen Schicht wenigstens eine Deckschicht angeordnet ist und daß der UV-Stabilisator in der/den Deckschichten enthalten ist.

10. Polyesterfolie nach Anspruch 9, **dadurch gekennzeichnet**, daß zwischen der COC-haltigen Schicht und der Deckschicht eine Zwischenschicht angeordnet ist.

11. Polyesterfolie nach einem oder mehreren der Ansprüche 1 bis 8, **dadurch gekennzeichnet**, daß die Folie einschichtig ist und aus der COC-haltigen Schicht besteht.

12. Weiße, biaxial orientierte, UV-stabilisierte Polyesterfolie umfassend mindestens eine Schicht, die COC in einer Menge von 2 bis 60 Gew.-%, bezogen auf das Gewicht dieser Schicht, enthält, wobei die Folie eine Opazität von mehr als 60 % aufweist, **dadurch gekennzeichnet**, daß die Folie zusätzlich einen UV-Stabilisator als Lichtschutzmittel in einer Menge von 0,1 bis 5 Gew.-%, vorzugsweise von 0,5 bis 3,0 Gew.-% enthält.

13. Weiße, biaxial orientierte, UV-stabilisierte Polyesterfolie umfassend mindestens eine Schicht, die COC in einer Menge von 2 bis 60 Gew.-%, bezogen auf das Gewicht dieser Schicht, enthält und die einen Weißgrad von mehr als 70 % aufweist, **dadurch gekennzeichnet**, daß die Folie zusätzlich einen UV-Stabilisator als Lichtschutzmittel in einer Menge von 0,1 bis 5 Gew.-%, vorzugsweise von 0,5 bis 3,0 Gew.-% enthält.

14. Weiße, biaxial orientierte, UV-stabilisierte Polyesterfolie umfassend mindestens eine Schicht, die COC in einer Menge von 2 bis 60 Gew.-%, bezogen auf das Gewicht dieser Schicht, enthält und die einen Glanz von mehr als

80 aufweist, **dadurch gekennzeichnet**, daß die Folie zusätzlich einen UV-Stabilisator als Lichtschutzmittel in einer Menge von 0,1 bis 5 Gew.-%, vorzugsweise von 0,5 bis 3,0 Gew.-% enthält.

**15.** Verwendung einer Folie nach einem der Ansprüche 1 bis 14 zur Verpackung von licht- und/oder luftempfindlichen Nahrungs- und Genußmitteln oder für den Einsatz im industrieellen Bereich, insbesondere bei der Herstellung von Prägefolien oder als Etikettenfolie, oder für Bildaufzeichnungspapiere, Druckbögen oder magnetische Aufzeichnungskarten.

Europäisches Patentamt

# EUROPÄISCHER RECHERCHENBERICHT

Nummer der Anmeldung
EP 01 10 3548

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | EP 0 522 758 A (UNITIKA LTD)<br>13. Januar 1993 (1993-01-13)<br>* Ansprüche 1,3,6,9-12 *<br>* Seite 6, Zeile 41 - Seite 7, Zeile 21 *<br>* Seite 8, Zeile 28 - Zeile 58 *<br>* Tabellen 4,6,8 *<br>* Beispiele 13,14 *<br>--- | 1-15 | C08J5/18<br>C08K5/3475<br>C08K5/3492<br>B32B27/18<br>B32B27/36<br>B32B27/32<br>C08G61/08<br>//C08L67:02 |
| Y | WO 97 00284 A (HOECHST AG ;MURSCHALL URSULA (DE); GAWRISCH WOLFGANG (DE); BRUNOW) 3. Januar 1997 (1997-01-03)<br>* Ansprüche 1-4,9 *<br>* Abbildung 1 *<br>--- | 1-15 | |
| X | EP 0 786 495 A (OJI YUKA SYNT PAPER CO LTD) 30. Juli 1997 (1997-07-30)<br>* Ansprüche 1,3 *<br>* Seite 5, Zeile 3 - Zeile 12 *<br>* Seite 5, Zeile 54 - Zeile 58 *<br>* Beispiele 5,6 *<br>--- | 1 | |
| | | | RECHERCHIERTE SACHGEBIETE (Int.Cl.7) |
| A | EP 0 339 258 A (GEN ELECTRIC)<br>2. November 1989 (1989-11-02)<br>* Ansprüche 1,4 *<br>--- | 1 | C09K<br>C08J<br>C08K<br>C08L<br>B32B<br>C08G |
| A | PATENT ABSTRACTS OF JAPAN<br>vol. 017, no. 689 (C-1143),<br>16. Dezember 1993 (1993-12-16)<br>& JP 05 230238 A (TOYOBO CO LTD),<br>7. September 1993 (1993-09-07)<br>* Zusammenfassung *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 24. April 2001 | Hillebrand, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 01 10 3548

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-04-2001

| Im Recherchenbericht angeführtes Patentdokument | Datum der Veröffentlichung | Mitglied(er) der Patentfamilie | Datum der Veröffentlichung |
|---|---|---|---|
| EP 0522758 A | 13-01-1993 | JP 5154972 A | 22-06-1993 |
| | | DE 69225643 D | 02-07-1998 |
| | | DE 69225643 T | 24-09-1998 |
| | | KR 203527 B | 15-06-1999 |
| | | US 5354595 A | 11-10-1994 |
| WO 9700284 A | 03-01-1997 | DE 19522118 C | 13-03-1997 |
| | | AU 6125896 A | 15-01-1997 |
| | | BG 102073 A | 31-08-1998 |
| | | BR 9609412 A | 18-05-1999 |
| | | CA 2225173 A | 03-01-1997 |
| | | CZ 9704142 A | 18-03-1998 |
| | | EP 0833858 A | 08-04-1998 |
| | | HU 9803029 A | 28-04-1999 |
| | | JP 11507965 T | 13-07-1999 |
| | | NO 975870 A | 12-12-1997 |
| | | PL 324207 A | 11-05-1998 |
| EP 0786495 A | 30-07-1997 | JP 9194693 A | 29-07-1997 |
| | | DE 69701644 D | 18-05-2000 |
| | | DE 69701644 T | 07-09-2000 |
| | | US 5677055 A | 14-10-1997 |
| EP 0339258 A | 02-11-1989 | JP 2014227 A | 18-01-1990 |
| JP 05230238 A | 07-09-1993 | KEINE | |

EPO FORM P0461

Für nähere Einzelheiten zu diesem Anhang : siehe Amtsblatt des Europäischen Patentamts, Nr.12/82